# EUROPÄISCHE PATENTSCHRIFT

(11) **EP 0 573 478 B1**
(45) Veröffentlichungstag und Bekanntmachung des Hinweises auf die Patenterteilung: **08.05.1996**
(21) Anmeldenummer: 92905214.0
(22) Anmeldetag: 27.02.1992
(51) Int. Cl.: C05F 3/00

(54) **VERFAHREN ZUR GETRENNTEN BEHANDLUNG UND ENTSORGUNG VON GEMENGEN AUS FESTEN UND FLÜSSIGEN, ORGANISCHEN ABFALLSTOFFEN**
PROCESS FOR SEPARATE TREATMENT AND DISPOSAL OF MIXTURES OF SOLID AND LIQUID ORGANIC WASTE MATERIALS
PROCEDE POUR LE TRAITEMENT SEPARE ET L'ELIMINATION DE MELANGES COMPOSES DE DECHETS ORGANIQUES SOLIDES ET LIQUIDES

(30) Priorität: 27.02.1991 CH 596/91
(43) Veröffentlichungstag der Anmeldung: 15.12.1993
(73) Patentinhaber: INTERLICENSE DEN HAAG B.V., NL-2596 HG Den Haag (NL)
(72) Erfinder: Steyskal, Felix, A-1050 Wien (AT)
(74) Vertreter: Büchel, Kurt F., Dr.
(86) Internationale Anmeldenummer: EP9200413
(87) Internationale Veröffentlichungsnummer: WO9215540

(56) Entgegenhaltungen:
- EP-A- 0 265 027
- EP-A- 0 396 390
- FR-A- 2 376 827
- FR-A- 2 483 946

## Beschreibung

Die Erfindung betrifft ein Verfahren nach dem Oberbegriff des Anspruches 1.
Man hat schon vorgeschlagen (FR-PS-2541669), aus der Flüssigphase von Abfallstoffen durch anaerobe Vergärung (und gegebenenfalls anschliessend aerobe Behandlung) anfallenden Schlamm den für eine Kompostierung vorgesehenen Feststoffanteilen zuzumischen. Dieses Verfahren hat allerdings den Nachteil, dass für relativ geringe Schlammengen eine eigene Eindickung vorgesehen werden muss, oder dass man unerwünscht grosse Flüssigkeitsmengen in die Kompostierung bringt.

Man hat auch schon vorgeschlagen (EP-A1-0302852), Motorabgas, eventuell aus der Verbrennung von Biogas, hinsichtlich seines C02-Gehaltes zur pH-Wert-Reduktion in Zwischenstufen der Vergärung oder Verrottung zu benutzen. Im ersten Fall muss dabei teures Heizgas oder -öl verwendet werden; im zweiten Fall wird das im Biogas ohnedies vorhandene C02 als Ballast mitgeschleppt und muss erwärmt werden.

Die Erfindung hat sich nun die Aufgabe gestellt, ein Verfahren zu schaffen, bei dem diese Nachteile vermieden werden, was überraschend zumindest teilweise durch die Massnahmen gemäss den kennzeichnenden Merkmalen des Anspruchs 1, noch besser allerdings durch diejenigen Merkmale gelingt, die in den Kennzeichen der abhängigen Ansprüche beschrieben sind.

Bei der anaeroben, wie auch bei einer allenfalls nachgeschalteten aeroben Behandlung der Flüssigphase fällt nur wenig Schlamm an; ein nicht unwesentlicher Teil der organischen Abfallstoffe, sowie der grösste Teil des Stickstoffs und Phosphors bleiben gelöst, belasten den Vorfluter bzw. die Kläranlage und sind für die Gewinnung von Düngemitteln oder dergleichen verloren.

Daher hat man auch schon vorgeschlagen, diese Stoffe aus der Flüssigphase durch chemische Verfahren, insbesondere durch Flockung, auszufällen; der sich dabei ergebende Niederschlag wurde jedoch entweder deponiert oder verbrannt, wobei wiederum sowohl das Grundwasser wie die Atmosphäre belastet wurden.

Die wesentlichen Merkmale der Erfindung sind Gegenstand des unabhängigen Anspruchs 1; bevorzugte Ausgestaltungen sind Gegenstand der abhängigen Ansprüche 2-6.

Nun hat es sich erfindungsgemäss als besonders zweckmässig erwiesen, das im Biogas enthaltene C02 in dem Ausgangsgemenge und/oder in der Flüssigphase in einem weitergehenden Stadium unter gleichzeitiger Reduktion von deren pH-Wert zu absorbieren; damit wird ein Teil der immerhin 30 bis 40 Vol.% C02 im Biogas direkt und ohne Umwege einerseits chemisch umgesetzt und erfüllt eine Aufgabe, für deren Lösung ansonsten gesonderte, kostspielige Massnahmen erforderlich wären; andererseits wird das Biogas angereichert und erhält damit einen höheren Heizwert, wird also wertvoller.

Den durch chemische Fällung bzw. Flockung in einer der Flüssigphasen erzielten Niederschlag hat man wie erwähnt bisher deponiert oder verbrannt; im Zusammenhang mit der Gattung des erfindungsgemässen Verfahrens kann dieser Niederschlag nun - gegebenenfalls nach Eindickung - dem Feststoffanteil in einem früheren Stadium und/oder - bevorzugt - dem Ausgangsgemenge zugesetzt werden, womit nicht nur die Belastung der Umwelt (Grundwasser, Atmosphäre) vermieden wird, sondern obendrein noch die im Niederschlag enthaltenen Wertstoffe (organische Humusbildner, Stickstoff und Phosphorverbindungen) erhalten bleiben und wieder dem Boden zugeführt werden können.

Setzt man den Niederschlag - wie dies bevorzugt ist - dem Ausgangsgemenge zu, dann wird dessen Trennung in Flüssigphase und Feststoffanteile erleichtert, insbesondere wenn es sich um Calziumcarbonat und/oder Spurenelemente enthaltende Mineralstoffe, wie z.B. Algenkalk und/oder Diatomeenerde handelt, die übrigens auch dem Ausgangsgemenge direkt zugesetzt werden können; dort binden sie nämlich schon direkt bis zu 20% des Stickstoffs und Phosphors, so dass von diesen Bestandteilen aus späteren Flüssigphasen nur geringere Mengen entfernt werden müssen.

Besonders zweckmässig hat sich im Zuge des erfindungsgemässen Verfahrens die an sich bekannte Magnesium-Ammonium-Phosphat-Fällung erwiesen; sie ist in verschiedenen Varianten einzubauen: Einerseits kann sie so geführt werden, dass auch sehr viel organisches Material in den Niederschlag geht, der dann dem Ausgangsgemenge oder den Feststoffanteilen zur Weiterbehandlung zugesetzt wird. Andererseits mag es erwünscht sein, nach einer chemischen Fällung bzw. Flockung der organischen Substanzen die MAP-Fällung nur im verbleibenden Überstand durchzuführen, womit sich ein fast reines Salz in Kristallen ergibt, das zu besonders hohen Preisen verkauft werden kann.

Der guten Vollständigkeit halber soll nicht unerwähnt bleiben, dass der zumindest NH4-Stickstoff natürlich auch durch Dampf-Strippung aus der Flüssigphase entfernt werden mag, womit er allerdings aus dem Kreislauf entfernt wird; jedoch kann man das dabei anfallende Ammoniumsalz (meist Sulfat oder Phosphat) auch als solches der Düngemittelindustrie zuführen oder den Feststoffanteilen entweder nach deren Rotte, in welchem Fall ein mineralisch-organischer Dünger entsteht, oder vorzugsweise vor deren Rotte zusetzen; in diesem Fall wird zumindest ein Teil des Stickstoffs organisch gebunden und liegt im Fertigdünger in der hoch erwünschten, organisch gebundenen Form vor; in dieser wird er an die Pflanzen nur langsam, gerade in der jeweils benötigten Menge abgegeben bzw. von ihnen aufgenommen; somit ist dann auch kein teurer Düngerüberschuss erforderlich, der noch dazu das Grundwasser belastet.

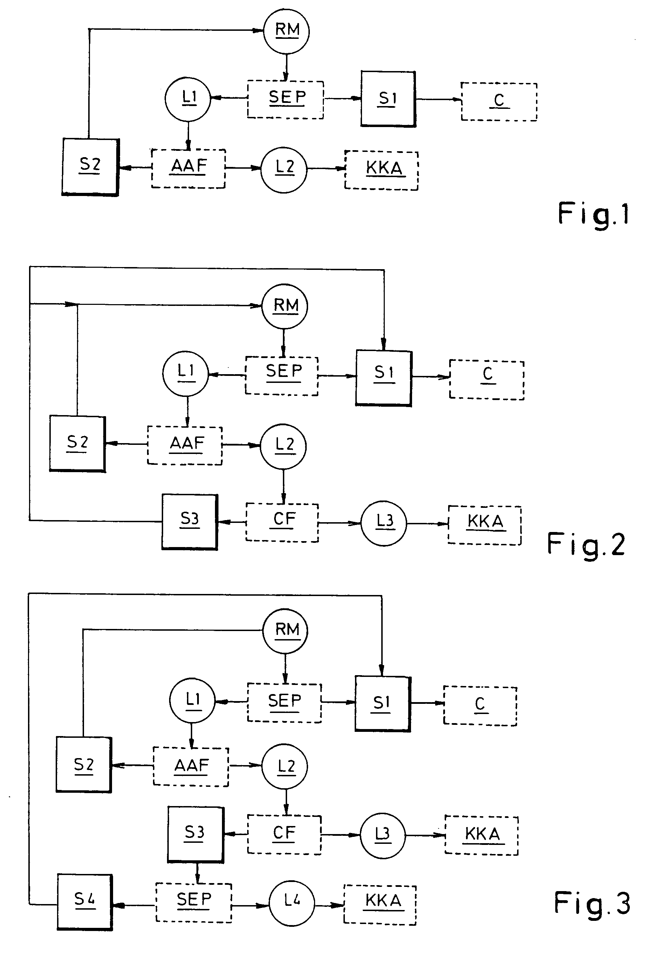

Das erfindungsgemässe Verfahren wird im folgenden anhand des Beispiels Schweinegülle näher erläutert; es ist jedoch wohlverstanden, dass es auch auf beliebige andere organische Abfallstoffe oder Mischungen aus solchen, wie z.B. Rindergülle, Klärschlamm, Molke etc. anwendbar ist. Zur Erläuterung dienen verschiedene Verfahrensschemata, die in den Fig.1 bis 9 dargestellt sind. In den Figuren bezeichnet ein Kreis jeweils eine Flüssigphase; ein Quadrat eine feste bzw. Schlammphase ein strichliertes Rechteck eine Behandlungsstufe.

Das in Fig.1 dargestellte Grundprinzip ist allen Verfahrensvarianten in den Fig.2 bis 8 gemeinsam: Die Rohmischung RM wird mittels eines Separationsvorganges SEP in eine Flüssigphase L1 und einen Schlamm S1 getrennt. Dieser Vorgang erfolgt zum Beispiel mittels einer stehenden Sieb-Zentrifuge, die billig in der Investition und wenig störungsanfällig ist, und auch wenig Energie verbraucht, aber den Schlamm S1 nur auf 20% TS (Trockensubstanz) bringt. Der Einsatz eines allerdings mehr als doppelt so teuren, horizontal liegenden Pressschnecken-Separators mit einem Sieb von 0,75 mm Maschenweite konzentriert den Schlamm S1 auf 35% TS. Ein zehnmal so teurer Dekanter, eine geschlossene, schnell drehende Schnecke, erzielt 30% TS, aber eine stärkere Reduktion der Feststoffe in der Flüssigphase L1.

**Tabelle 1**

| Schmutzfracht von Schweinegülle im Vergleich mit kommunalem Abwasser | | | | | |
|---|---|---|---|---|---|
| | Rohgülle pro Schwein | | | Kommunales Abwasser pro EGW (Einwohnergleichwert) | |
| Menge (l/Tag) | Bereich 3 - 10 | Durchschnitt 8,3 | | 200 | |
| | Konzentration (g/l) | | Gesamtfracht (g) | Konzentration (mg/l) | Gesamtfracht (g) |
| | Bereich | Durch schnitt | | | |
| CSB | 30 - 90 | 50 | 415 | 600 | 120 |
| BSB5 | 10 - 40 | 25 | 207 | 300 | 60 |
| NH4-N | 2 - 4 | 2,5 | 20,8 | 60 | 12 |
| N ges | 3 - 7 | 3,5 | 29 | 100 | 20 |
| P04-P | 0,2 - 1,2 | 0,6 | 5 | 30 | 6 |

**Tabelle 2**

| Schmutzfracht d.ersten Flüssigphasen pro Tag (bei 160 m3 Schweinegülle von knapp 20.000 Schweinen) | | | | | | |
|---|---|---|---|---|---|---|
| | RM (Rohmischung) | | L1 (nach der Separation SEP) | | L2 (nach der anaeroben Fermentation (AAF) | |
| Menge (m³) | 160 | | 155 | | 150 | |
| | Konzentration (g/l) | Gesamtfracht (kg) | Konzentration (g/l) | Gesamtfracht (kg) | Konzentration (g/l) | Gesamtfracht (kg) |
| CSB | 50 | 8000 | 4 | 6200 | 20 | 3000 |
| BSB5 | 25 | 4000 | 2 | 385 | 5 | 750 |
| NH4-N | 2,5 | 400 | 2,4 | 372 | 3 | 450 |
| N ges | 4 | 640 | 3,5 | 542,5 | 3,5 | 525 |
| P04-P | 0,6 | 96 | 0,6 | 93 | 0,8 | 120 |

Wie aus Tabelle 2 ersichtlich, ist durch die Separation allein nur eine geringfügige Reduktion der Schmutzfracht zu erzielen. Trotzdem ist sie nicht nur vorteilhaft, sondern geradezu erforderlich: man gewinnt dabei einerseits Feststoffe für die weitere, erwünschte Kompostierung C und reduziert die Schmutzfracht immerhin schon etwas; andererseits würde die anschliessende anaerobe Fermentation AAF durch Schwimmdeckenbildung empfindlich gestört.

Die Flüssigphase L1 wird daher nun einer anaeroben Fermentation AAF unterworfen, deren sich im Bodentrichter des Reaktionsgefässes ansammelnder Schlamm S2 (es handelt sich nur um 1 bis 2% der gesamten Durchsatzmenge) mit 5% TS ohne Separation (die sich dafür nicht rentiert) im Kreislauf wieder der Rohmischung RM zugefügt wird. Dabei wird nicht nur Biogas erzeugt, sondern es werden auch in der Schweinegülle vorhandene, höhere Verbindungen zerlegt.

In den Tabellen 1 und 2 werden die Schmutzfrachten der Flüssigphasen für die gesamten organischen Stoffe als CSB-Wert; davon für biologisch abbaubare organische Stoffe als BSB5Wert; für den im Gesamtstickstoff enthaltenen NH4-Stickstoff; und schliesslich für den Phosphorgehalt als Phosphat-(P04-) Phosphor angeführt.

Die resultierende Flüssigphase L2 ist immer noch mit etwa der Hälfte der organischen Schmutzfracht, die zum grössten Teil biologisch schwer abbaubar ist, und mit dem gesamten Stickstoff und löslichen Phosphor beladen. Sie bedeutet daher noch immer eine sehr starke Belastung für eine kommunale Kläranlage KKA (Fig.1).

Ein weiterer Schritt besteht daher in einer chemischen Fällung bzw. Flockung CF in der Flüssigphase L2. In Abhängigkeit von deren Zusammensetzung und der verwendeten Fällungsmethode (z.B. 5 kg Algenkalk und 30 ℓ einer verdünnten Polyelektrolytmischung, wie z.B. Prestol^{(R)} der Firma Stockhausen) kann der sich nach der Fällung absetzende Schlamm S3, der bis zu 30% der Rohmischungsmenge ausmachen kann und ebenfalls etwa 10% TS enthält, wiederum der Rohmischung RM, z.B. in einem Güllelagerbecken zugesetzt werden, ebenso wie der Schlamm S2 aus der anaeroben Fermentation AAF; dadurch kommt es dort bereits zu der gewünschten Vorversäuerung.

Der Schlamm S3 kann aber auch gleich dem Schlamm S1 zur Kompostierung C zugesetzt werden (Fig.2), letzteres insbesondere dann, wenn dort sehr trockene Materialien, wie z.B. Stroh, Masthennenmist oder dergleichen kompostiert werden sollen.

In anderen Fällen mag es jedoch zweckmässig sein, den Schlamm S3 durch eine zusätzliche Separation weiter einzudicken, z.B. mittels eines Pressschnecken separators oder einer Kammerfilterpresse, bzw. einer Siebpresse mit nur 0,02 mm Maschenweite; dies insbesondere dann, wenn man den Schlamm S3 direkt dem Schlamm S1 zur Kompostierung zusetzen will, die meistens einen Mindestgehalt von 40-50% TS erfordert (Fig.3). Die resultierenden Flüssigphasen L3 und L4 enthalten immer noch den grössten Teil des Stickstoffs; nur der Phosphor wurde weitgehend eliminiert.

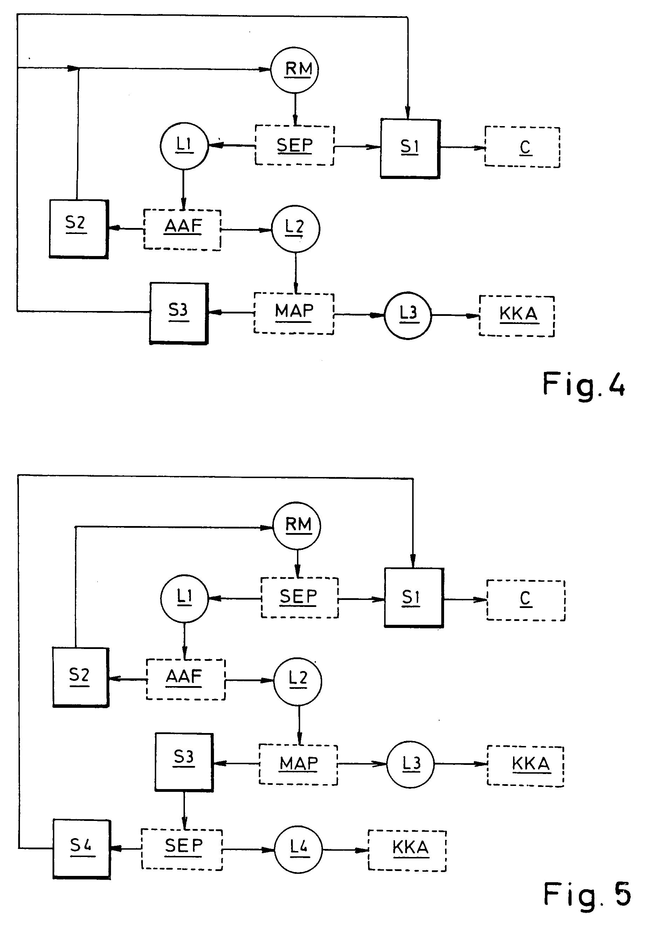

Zur Stickstoffentfernung bedient man sich bekannter Verfahren, wie z.B. der Magnesium-Ammonium-Phosphat-(MAP)-Fällung oder der Dampfstrippung. Die erstere wiederum kann andererseits auch an Stelle der chemischen Fällung CF (Fig.4 und 5) eingesetzt werden, in welchem Fall eine Menge organischer Stoffe in den Niederschlag mitgerissen werden. Für diese Fälle sind die in der Flüssigphase L3 verbleibenden Schmutzfrachten der Tabelle 3 zu entnehmen. Wie ersichtlich, entfernt die chemische Fallung CF die organischen Stoffe besser als die MAP; die letztere lässt jedoch weniger Stickstoff in der Flüssigphase zurück. Dies gilt sowohl bei einer Verfahrensführung bzw. zugesetzten Chemikalienmenge mit nur 80% Wirkungsgrad, wie auch für die ungleich viel teurere Verfahrensführung mit 97% Wirkungsgrad durch wesentlich höheren Chemikalienzusatz; man wird daher in der Regel der ersteren den Vorzug geben.

**Tabelle 3**

| Schmutzfracht der Flüssigphasen L3 pro Tag (bei 160 m3 Schweinegülle von knapp 20.000 Schweinen) | | | | | | |
|---|---|---|---|---|---|---|
| | L3 (nach der chem.Fällung CF, Fig.2 und 3) | | L3 (nach der Magnesium-Ammonium-phosphat-Fällung MAP, ohne CF Fig. 4 und 5) | | | |
| Menge (m³) | 160 | | mit 80% Wirkungsgrad 155 | | mit 97% Wirkungsgrad 150 | |
| | Konzentration (g/l) | Gesamtfracht (kg) | Konzentration (g/l) | Gesamtfracht (kg) | Konzentration (g/l) | Gesamt fracht (kg) |
| CSB | 5 | 700 | 12 | 1560 | 12 | 1560 |
| SB5 | 1 | 140 | 3 | 390 | 3 | 390 |
| NH4-N | 2,6 | 364 | 0,5 | 65 | 0,1 | 13 |
| N ges | 3 | 420 | 1 | 130 | 0,5 | 65 |
| P04-P | 0,1 | 14 | 0,1 | 13 | 0,05 | 6,5 |

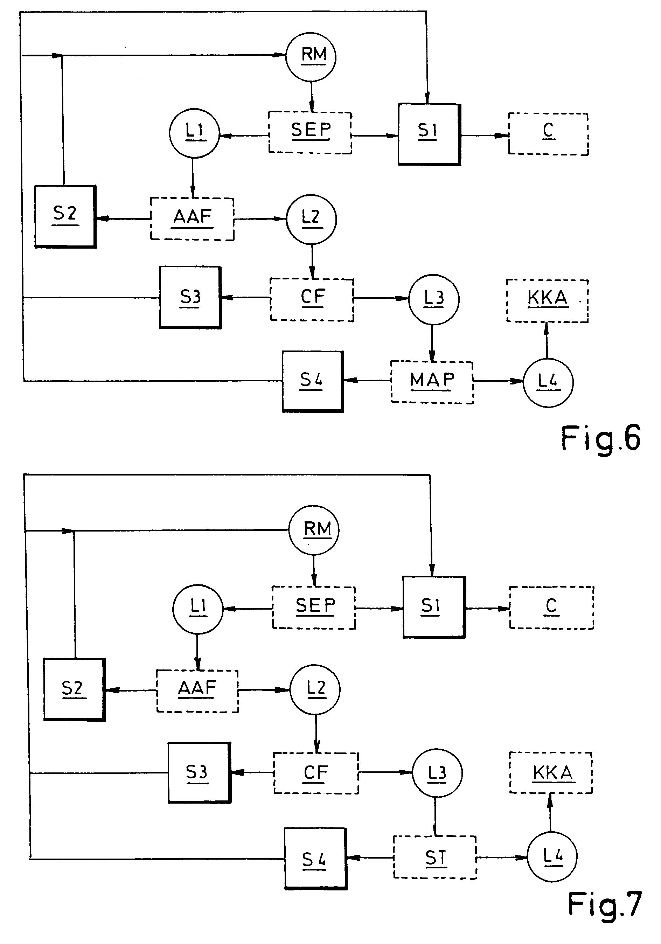

Andererseits wird daraus klar, dass ein Optimum nur durch die Kombination der beiden Fällungsmethoden erzielt werden kann, wie dies in Fig.6 ersichtlich ist, und deren Ergebnisse der Tabelle 4 zu entnehmen sind. Dort sind auch diejenigen Werte aufgeführt, die nach der Reinigung durch das Belebtschlammbecken einer kommunalen Kläranlage für das Ablassen der letzten Flüssigphasen in den Vorflutern übrigbleiben: Die verbleibende Schmutzfracht der ursprünglichen Gülle von 20'000 Schweinen entspricht gerade noch 50 bis 100 Einwohnergleichwerten!

**Tabelle 4**

| Schmutzfracht pro Tag in der Flüssigphase L3 und nach einer kommunalen Kläranlage oder einem Belebtschlammbecken bei 160 m3 Rohgülle von knapp 20.000 Schweinen) | | | | | | |
|---|---|---|---|---|---|---|
| | L3 (nach der chemischen Fällung CF und der Magnesium-Ammonium-phosphat-Fällung MAP (Fig.6) | | | | KKA (nach der kommunalen Kläranlage) | |
| Menge (m³) | mit 80% Wirkungsgrad 130 | | mit 97% Wirkungsgrad 130 | | | |
| | Konzentration (g/l) | Gesamtfracht (kg) | Konzentration (g/l) | Gesamtfracht (kg) | Konzentration (g/l) | Gesamt fracht (kg) |
| CSB | 4 | 520 | 4 | 520 | 0,075 | 9,75 |
| BSB5 | 0,8 | 104 | 0,8 | 104 | 0,02 | 35 |
| NH4-N | 0,5 | 65 | 0,1 | 13 | 0,005 | 0,65 |
| N ges | 0,8 | 104 | 0,5 | 65 | 0,01 | 1,30 |
| P04-P | 0,05 | 6 | 0,05 | 6,5 | 0,005 | 0,65 |

Es ist wohlverstanden, dass man nach dem in Fig.6 beschriebenen Verfahren den Schlamm S3 (aus der chemischen Fällung CF) und/oder den Schlamm S4 (aus der MAP-Fällung), die je etwa nur 10% TS aufweisen, gewünschtenfalls auch über einen zusätzlichen Separationsschritt (nicht dargestellt), eindicken kann, und zwar analog zu dem Unterschied zwischen Fig.4 und 5. In diesem Fall wird allerdings der konzentrierte Schlamm keinesfalls mehr der Rohmischung, sondern jedenfalls immer dem zur Kompostierung C vorgesehenen Schlamm S1 zugemischt.

Fig.7 zeigt eine Abwandlung der Fig.6: Statt der MAP-Fällung wird eine Dampfstrippung vorgenommen; dies bedarf eines pH-Wertes von 9-10, was zwar z.B. durch Zusatz von Natronlauge, aber eben nur unter hohen Kosten, erreicht werden kann; bei der Verwendung von Kalk verstopft der sich dabei bildende Schlamm sehr bald die Füllkörper in dem Reaktionsgefäss. Als Alternative kann man trotzdem den billigen Kalk zugeben und verbindet diesen Verfahrensschritt gleich mit einer chemischen Fällung CF. Bei der Strippung fällt nach Einleiten des ausgetriebenen Ammoniakgases in eine Schwefelsäure-Vorlage Ammonsulfat aus und wird entweder als solches verkauft, oder - wie oben erwähnt - dem für die Kompostierung vorgesehenen Schlamm S1 beigemischt.

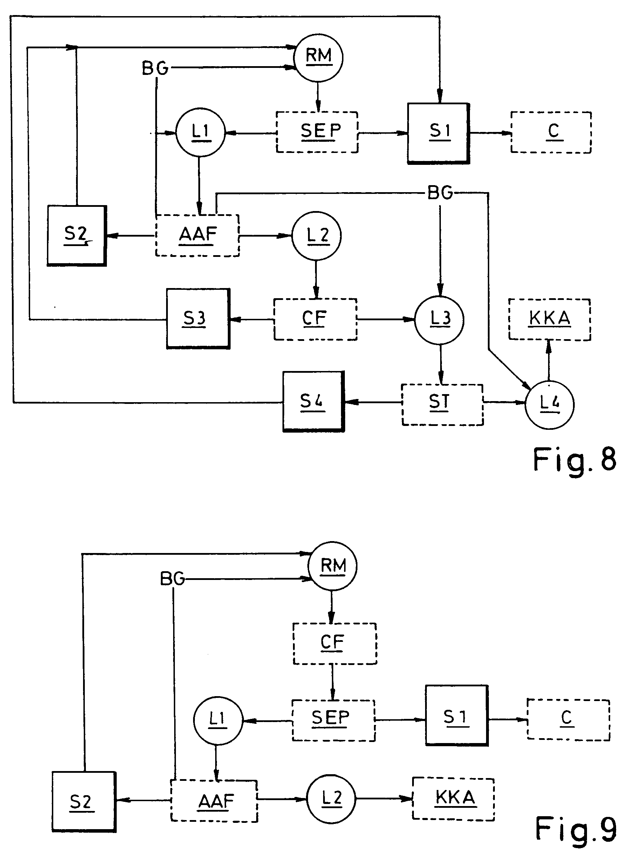

In den Fig.8 und 9 schliesslich werden diejenigen erfindungsgemässen Verfahrensschritte veranschaulicht, die mit der Führung des in der anaeroben Fermentation AAF entstehenden Biogases BG im Kreislauf zu tun haben. Überschüssiges Biogas BG wird dabei immer (nicht dargestellt) in an sich bekannter Weise für die Energiegewinnung herangezogen. Je nach der Dauer der anaeroben Fermentation AAF kann die Menge und Qualität des erzeugten Biogases BG so gesteuert werden, dass das ganze Verfahren autark läuft, das heisst, dass genau so viel Biogas (60 - 70% Methan) erzeugt wird, wie für die Trocknung und den Energieverbrauch notwendig ist. Die Abwärme wird je nach Bedarf zur Erwärmung und damit besseren Reaktionsfähigkeit der Rohmischung RM vor der anaeroben Fermentation AAF bzw. zur Reaktorheizung verwendet.

In dem Verfahren nach Fig.8 wird Biogas BG zur direkten Ansäuerung der ersten Flüssigphase L1 und/oder der Rohmischung RM, sowie jedenfalls immer der letzten Flüssigphase L4 nach der Strippung ST zugesetzt, die ja mit einem pH-Wert von 9-10 anfällt und so keinesfalls in die kommunale Kläranlage gelassen werden kann. Die Schlämme S3 und/oder S4 werden nach einem der Verfahren gemäss den Fig.2 bis 7 weiterbehandelt.

Fig.9 endlich zeigt ein Verfahren, bei dem im Gegensatz zu allen vorbeschriebenen Verfahren die mittels Biogas BG angesäuerte Rohmischung RM noch vor der Separation SEP einer dadurch vebesserten bzw. erleichterten chemischen Fällung unterworfen wird.

Dieses Vorgehen ermöglicht besonders gut die Steuerung der Menge und Qualität des anfallenden Biogases BG. Während z.B. aus 1 m3 der rohen Schweinegülle bei normaler anaerober Fermentation AAF in 10 Tagen 15 m3, in 15 Tagen 20 m3 Biogas entstehen, bilden sich nach vorangegangener chemischer Fällung CF in 15 Tagen nur mehr 9 m3 Biogas, weil in der Flüssigphase nach der Separation SEP nur mehr weniger organische Substanz bleibt; man kommt dabei übrigens auch mit kleineren Reaktoren aus und bedarf daher nur geringerer Investitionen. Allerdings muss dabei unter Umständen eine zusätzliche Energiequelle in Betracht gezogen werden, wenn der Heizwert des Biogases nicht mehr ausreicht.

Allen veranschaulichten Verfahren ist gemeinsam, dass die letzte Flüssigphase L3 oder L4 anstelle in eine kommunale Kläranlage auch in eine andere weitergehende Abwasserreinigung geführt werden kann, z.B. in ein eigens dafür errichtetes Belebtschlammbecken; die Flüssigphasen können jedoch anstelle von Frischwasser zumindestens teilweise der Stallreinigung zugeführt werden und laufen in dieser Weise im Kreis, wobei die verbliebenen Schmutzfrachtanteile bei der nächsten chemischen Fällung herausgeholt werden.

Allerdings wird unter bestimmten Umständen und zu bestimmten Jahreszeiten auch die Ausbringung der immerhin schon teilweise hygienisierten Flüssigphasen L3 bzw. L4 in die Landwirtschaft, z.B. durch Verregnung, ins Auge gefasst werden können.

## Patentansprüche

1. Verfahren zur getrennten Behandlung und Entsorgung von Gemengen aus festen und flüssigen, organischen Abfallstoffen, wobei das Gemenge durch mechanische Trennung in eine Flüssigphase mit einem niedrigen Feststoffgehalt in feinstverteilter Form und einen Feststoffanteil mit einem Wassergehalt aufgespalten wird, worauf die Flüssigphase unter Bildung von Biogas einem anaeroben, der Feststoffanteil unter Bildung von Kompost, Dünger oder Futtermittel einem aeroben Fermentationsvorgang unterworfen werden, dadurch gekennzeichnet, dass im Biogas und/oder in der Flüssigphase enthaltene Ballaststoffe durch chemische Massnahmen entfernt und dem Ausgangsgemenge, bzw. der Flüssigphase oder dem Feststoffanteil in jeweils einem früheren Stadium zugeführt werden, bevor das Biogas verbrannt bzw. die Flüssigphase in eine Kläranlage abgelassen oder der weitergehenden Reinigung zugeführt wird.

2. Verfahren nach Anspruch 1, dadurch gekennzeichnet, dass das im Biogas enthaltene C02 in dem Ausgangsgemenge und/oder in der Flüssigphase in einem weitergehenden Stadium, unter gleichzeitiger Reduktion von deren pH-Wert, absorbiert wird.

3. Verfahren nach Anspruch 1 oder 2, dadurch gekennzeichnet, dass der durch chemische Fällung bzw. Flockung in der Flüssigphase erzielte Niederschlag - gegebenenfalls nach Eindickung - dem Feststoffanteil in einem früheren Stadium und/oder - bevorzugt - dem Ausgangsgemenge zugesetzt wird.

4. Verfahren nach Anspruch 3, dadurch gekennzeichnet, dass die Flockung mittels eines Polyelektrolyten in Kombination mit Calziumcarbonat und/oder Spurenelemente enthaltenden Mineralstoffen, insbesondere Algenkalk und/oder Diatomeenerde, erfolgt.

5. Verfahren nach einem der Ansprüche 1 bis 3, dadurch gekennzeichnet, dass eine Stickstoffelimination durch Strippung oder mittels einer Fällung nach dem Magnesium-Ammonium-Phosphat-(MAP)-Verfahren erfolgt.

6. Verfahren nach Anspruch 3, dadurch gekennzeichnet, dass die Flockung der organischen Komponenten allein oder im Zusammenhang mit einer Fällung nach dem Magnesium-Ammonium-Phosphat-(MAP)-Verfahren erfolgt.

## Claims

1. Process for the separate treatment and disposal of mixtures of solid and liquid organic wastes, the mixture being divided by mechanical separation into a liquid phase having a low solids content in very finely dispersed form and a solid fraction having a water content, and thereafter the liquid phase being subjected to an anaerobic fermentation process with formation of biogas and the solid fraction being subjected to an aerobic fermentation process with formation of compost, fertilizer or feed, characterized in that ballast substances contained in the biogas and/or in the liquid phase are removed by chemical measures and fed to the starting mixture or to the liquid phase or to the solid fraction in an earlier stage in each case before the biogas is incinerated or the liquid phase is discharged into a wastewater treatment plant or sent for further purification.

2. Process according to Claim 1, characterized in that the CO₂ contained in the biogas is absorbed in the starting mixture and/or in the liquid phase in a further stage, with simultaneous reduction of the pH thereof.

3. Process according to Claim 1 or 2, characterized in that the precipitate obtained by chemical precipitation or flocculation in the liquid phase is added - optionally after thickening - to the solid fraction in an earlier stage and/or - preferably - to the starting mixture.

4. Process according to Claim 3, characterized in that the flocculation is effected by means of a polyelectrolyte in combination with calcium carbonate and/or minerals containing trace elements, in particular siliceous limestone and/or kieselguhr.

5. Process according to any of Claims 1 to 3, characterized in that a nitrogen elimination is effected by stripping or by means of precipitation by the magnesium ammonium phosphate (MAP) method.

6. Process according to Claim 3, characterized in that the flocculation of the organic components is carried out alone or in association with precipitation by the magnesium ammonium phosphate (MAP) method.

## Revendications

1. Procédé pour le traitement et la gestion séparés de mélanges de déchets solides et liquides, organiques, le mélange étant scindé par séparation mécanique en une phase liquide à faible teneur en substances solides sous une forme divisée aussi finement que possible, et une fraction substance solide contenant de l'eau, après quoi on soumet la fraction substance solide à une opération de fermentation aérobie avec formation de biogaz, la fraction substance solide à une opération de fermentation aérobie avec formation de compost, d'engrais et d'aliments pour animaux, caractérisé en ce qu'on élimine les substances de lest contenues dans le biogaz et/ou dans la phase liquide par des mesures chimiques et on les envoie au mélange de départ, ou à la phase liquide ou à la fraction substance solide, à un stade antérieur à chaque fois, avant de brûler le biogaz, ou de vidanger la phase liquide ou de l'envoyer dans une installation d'épuration ultérieure.

2. Procédé selon la revendication 1, caractérisé en ce que le CO₂ contenu dans le biogaz est absorbé dans le mélange de départ et/ou dans la phase liquide à un stade ultérieur, avec abaissement simultané de son pH.

3. Procédé selon la revendication 1 ou 2, caractérisé en ce que le précipité obtenu dans la masse liquide par précipitation chimique ou floculation est ajouté, le cas échéant après épaississement, à la fraction substance solide et/ou, de préférence, au mélange de départ.

4. Procédé selon la revendication 3, caractérisé en ce que le flocage est effectué au moyen d'un polyélectrolyte associé à des substances minérales contenant du carbonate de calcium et/ou des oligoéléments, en particulier de la chaux d'algues et/ou de la terre de diatomées.

5. Procédé selon l'une des revendications 1 à 3, caractérisé en ce qu'on effectue une élimination de l'azote par stripage ou par une précipitation selon le procédé au phosphate de magnésium et d'ammonium (MAP).

6. Procédé selon la revendication 3, caractérisé en ce qu'on effectue le flocage des constituants organiques seul ou en liaison avec une précipitation par le procédé au phosphate de magnésium et d'ammonium (MAP).
